# EUROPÄISCHE PATENTANMELDUNG

(11) **EP 1 505 538 A2**
(43) Veröffentlichungstag der Anmeldung: **09.02.2005**
(21) Anmeldenummer: 04007602.8
(22) Anmeldetag: 30.03.2004
(51) Int. Cl.: G06K 19/077, G09F 3/20, G06F 17/60

(54) **Sensitives Smart-Label**

(30) Priorität: 05.08.2003 DE 10336321
(71) Anmelder: Deutsche Telekom AG, 53113 Bonn (DE)
(72) Erfinder: Bindel, Frank, 53639 Königswinter (DE); Brackmann, Ludwig, Dip.-Ing., 53225 Bonn (DE)

(57) **Zusammenfassung**

Zum Aufbringen auf Waren vorgesehenes intelligentes Etikett ("Smart-Label") (2) aufweisend eine elektronische Schaltung, einen Speicher zur Aufnahme insbesondere produktspezifischer Daten, eine Vorrichtung zur Datenübertragung und Sensormittel, das eine gezielte Beaufschlagung (3) des Etiketts registriert, und wobei ein mit der Vorrichtung zur Datenübertragung verbundenes Kontrollmittel eine Datenübertragung (4) freigibt, sobald es einen von dem Sensormittel aufgrund der Beaufschlagung generierten Impuls erhält.

## Beschreibung

Die vorliegende Erfindung betrifft ein zum Aufbringen auf Waren geeignetes intelligentes Etikett ("Smart-Label"), das aufweist eine elektronische Schaltung, insbesondere einen Mikroprozessor, einen Speicher zur Aufnahme insbesondere produktspezifischer Daten und eine Vorrichtung zur Datenübertragung.

Solche Smart Labels sind als Produkte der fortschreitenden Miniaturisierung integrierter Schaltkreise bekannt und gewinnen immer mehr an Attraktivität. Diese "intelligenten" Etiketten tragen produktspezifische Daten oder Identitätsnummern in ihrem Speicher, die über ein externes Lesegerät ausgelesen werden können. Das Lesegerät weist eine Sendeantenne auf, mit der das Label, das die Funktion eines Transponders realisiert, einem Wechselfeld ausgesetzt wird. Über dieses Transpondersystem werden die im Speicher vorhandenen Daten abgefragt. Dabei handelt es sich bei den auf Smart Labels gespeicherten Daten meist um Referenzen, beispielsweise um Seriennummern oder "EAN"-Codes, die ergänzt sein können um einfache Klartext-Daten, wie Herstellungsdatum, Produktbezeichnung oder Herstellername. Weiterführende Information, wie Gebrauchsanweisungen, Inhaltsstoffe oder Garantieinformationen, können dann mit Hilfe der Referenz aus gesonderten Datenbanken abgefragt werden.

Insgesamt sind Smart Labels preiswerte, per Funk auslesbare Datenspeicher für ein geringes Datenvolumen. In Zukunft werden die Smart Labels (auch "lowest cost RFID Tags" genannt) den Bar Code ablösen und mit ihrer Vielseitigkeit weitere Anwendungsfelder erschließen.

Nachteilig an den bekanten Systemen ist jedoch, dass die Lese-Geräte nicht erkennen können, welches der in ihrem Funk-Empfangsbereich befindlichen Smart Label ausgelesen werden sollen. Es bleibt auch ungewiss, ob der lesende Nutzer überhaupt auf die abgefragten Informationen auf dem Smart Label oder aus der zugehörigen Datenbank zugreifen darf. So werden bislang keine Zugriffsrechte kontrolliert und auch keine nutzerspezifische Auswahl der auszulesenden Daten getroffen. Außerdem kann das System nicht erkennen, auf welchem der mehreren mitunter zur Verfügung stehenden Anzeigemedien die Information angezeigt werden soll.

Aufgabe der Erfindung ist es nunmehr, eine kostengünstige und mit einfachen technischen Mitteln umsetzbare Möglichkeit zu schaffen, einerseits Smart Labels zu individualisieren, um sie gezielt ansprechen zu können, und andererseits die Systeme vor unerlaubtem Zugriff zu sichern.

Diese Aufgabe wird durch Etiketten mit den kennzeichnenden Merkmalen des Anspruch 1 gelöst.

Der Grundgedanke der Erfindung liegt letztendlich darin, dass dem Smart Label ein Sensormittel zugeordnet wird, das zunächst wirksam angesprochen werden muss und das das Label in Folge der wirksamen Anregung zum Datenaustausch "aktiviert". Das Ansprechen des Sensormittels geschieht erfindungsgemäß durch eine gezielte Beaufschlagung des Labels oder Etiketts, wobei die physikalische Natur der Beaufschlagung eine beliebige sein kann. Erfindungsgemäß steht das Sensormittel mit einem Kontrollmittel in Verbindung, dem es nach einer wirksamen Beaufschlagung ein Signal gibt, wobei das Signal für das Kontrollmittel das Zeichen ist, einen Datenaustausch durch die entsprechende Vorrichtung freizugeben.

Dabei muss es sich bei diesem von dem Kontrollmittel initiierten Datenaustausch noch nicht unbedingt um die Übermittlung der in dem Speicher befindlichen Daten handeln. So können im Rahmen dieser "Vorkorrespondenz" zwischen dem Label und dem Lesegerät zunächst auch nur von dem Transponder des Labels modifizierte Erkennungsdaten ausgetauscht werden. Besonders vorteilhaft ist es jedoch, wenn das Kontrollmittel die Übertragung zumindest von Teilen der im Speicher vorhandenen spezifischen Daten freigibt.

Die Erfindung kann realisiert werden mit einem Label der bekannten Technik, das zusätzlich mit Sensor- und Kontrollmittel bestückt ist. Die technische Grundlage für das erfindungsgemäße Label kann daher ein Smart Label mit entsprechender Erweiterung sein. Je nach Anforderung bedarf es noch eines Hintergrundsystems, das einem Nutzer die Möglichkeiten des erfindungsgemäßen Labels nutzbar macht.

Die Erfindung kann in mehrfacher Weise genutzt werden: So ist es einerseits möglich, jegliche Datenübertragung vom Label zu einem Lesegerät generell erst nach dem wirksamen Ansprechen des Sensormittels freizugeben. In diesem Fall ist das wirksame Ansprechen die Voraussetzung für den Zugang zu den auf dem Label abgelegten Daten. In einer anderen Ausführungsform ist es auch denkbar, über die Einwirkung auf das Sensormittel eine spezielle Art von Datenübertragung zu aktivieren, die sich von der oben genannten Auslese der Daten durch ein Lesegerät unterscheidet. So kann beispielsweise ein Verbraucher, der auf einer Ware ein solches Label findet, dieses durch einen Fingerdruck aktivieren, die im Speicher abgelegte Kundeninformation über ein in der Nähe befindliches und für den Kunden zugängliches Anzeigegerät auszugeben. Als Anzeigegerät kann ein in der Nähe befindlicher Bildschirm oder das Handy des Kunden dienen. In dieser Art der Verwendung wird das gezielt angesprochene Label für den Verbraucher "lesbar", ohne dass er sich unmittelbar eines Lesegerätes bedienen müsste. Beide Ausführungsformen können auch nebeneinander auf einem Label realisiert sein.

Generell resultieren der Nutzen und die Vorteile der Erfindung daraus, dass ein Smart Label für die Auslese durch ein Lesegerät in dem Sinne individualisierbar ist, dass es selektiv angesprochen werden kann. Außerdem kann es in ein System eingebunden werden, das dem Kunden bei Bedarf die auf dem Label abgelegte Information zur Verfügung stellt. Das erfindungsgemäße Label lässt sich nicht nur als Informationsspeicher nutzen, sondern kann auch in ein Verkaufs- und Bezahlungssystem einbezogen werden.

Gerade für den Einsatz des Labels als Informationsquelle für den an dem mit Label versehenen Produkt interessierten Kunden ist es besonders vorteilhaft, wenn die Beaufschlagung ohne weitere Hilfsmittel auf mechanischem Wege möglich ist, wenn also ein Sensormittel vorgesehen ist, das eine mechanische Beaufschlagung registrieren kann. In einer besonderen Ausführungsform könnte das Sensormittel mit einen kontaktsensitiven Bereich, insbesondere einen Mikroschalter, ausgestattet sein, wobei das Sensormittel nach einer Berührung des kontaktsensitiven Bereiches durch einen Nutzer das Signal respektive den Impuls generiert. In dieser Ausführungsform kann das Label mit einem einfachen Fingerdruck aktiviert werden.

In einer anderen Form kann das Label sensitiv auf die Körperwärme sein oder einen Stromfluss feststellen, der über den Hautkontakt zustande kommt.

Bevor die Auslese "sensibler" Daten ermöglicht wird, kann es vorteilhaft sein, wenn sich der interessierte Leser zunächst legitimiert. Dazu kann das Sensormittel mit einem Sensor zur Erkennung biometrischer Daten, insbesondere mit einem Sensor zur Erkennung des Fingerabdruckes ausgestattet sein. Ein solcher Fingerprintsensor kann einen kontaktsensitiven Bereich aufweisen, auf den der Finger aufgelegt wird, wobei das Sensormittel über das Linienmuster der Oberfläche eine Authentifikation des Nutzers vornehmen kann. Die entsprechende Erkennungssoftware kann auf dem Label oder einen erreichbaren Computer laufen. So übermittelt der Nutzer durch Berühren des Labels seine Identifikation. Das Label sendet nun die Identifikationsinformationen zusammen mit seinem Inhalt an das Lesegerät. Dieses kann nun in einer Datenbank die Informationen auswählen, die der Nutzer erhalten möchte, erhalten darf oder erhalten soll und kann diese anzeigen.

Bei einer alternativen Ausführungsform kann die Identifikation über eine elektrische Verbindung geschehen, die der Finger zwischen einem am Körper getragenen ID-Generator und dem Label herstellt. Nach Herstellung der Verbindung kann eine Datenfolge an das Label übermittelt werden, die dieses dann zusammen mit dem Inhalt an das Lesegerät sendet.

Die Beaufschlagung des Sensormittels kann in einer anderen Ausführungsform auch über elektromagnetische Strahlung geschehen. Dazu ist es vorteilhaft, wenn das Sensormittel einen auf eine vorgebbare Frequenz und/oder eine vorgebbare Kennung sensiblen photosensitiven Bereich aufweist, der von einer Photodiode realisiert werden kann. Nach der Beaufschlagung des photosensitiven Bereiches mit dem Lichtsignal entsprechender Frequenz und/oder Kennung generiert das Sensormittel den zum Datenaustausch benötigten Impuls. Die Quelle, die auch in anderen Frequenzbereichen Strahlung aussenden könnte, ist vorteilhafterweise direkt am Lesegerät angebracht.

In einer besonderen Ausführungsform ist ein Management System vorgesehen, das aufgrund der vom Nutzer an das Label übertragenen Anmelde-Informationen weiß, welche Endgeräte dem Nutzer selber zur Verfügung stehen und/oder wo er sich gerade aufhält und/oder welche Endgeräte sich in seinem Umfeld befinden. Diese Endgeräte können beispielsweise Displays sein, die in dem Geschäft in der Nähe der Waren aufgestellt sind. Die Information über den Standort des Nutzers kann über GPS oder über eine Zelleninformation des Mobilfunks ermittelt werden. Je nach Standort, nach vorhandenen Endgeräten und/oder nach abgefragter Information erhält der Nutzer die Daten auf das passende multimediale Endgerät. So kann er sich den Preis des Produktes per SMS auf seinem Handy oder einen Werbespot auf einem TV darstellen lassen.

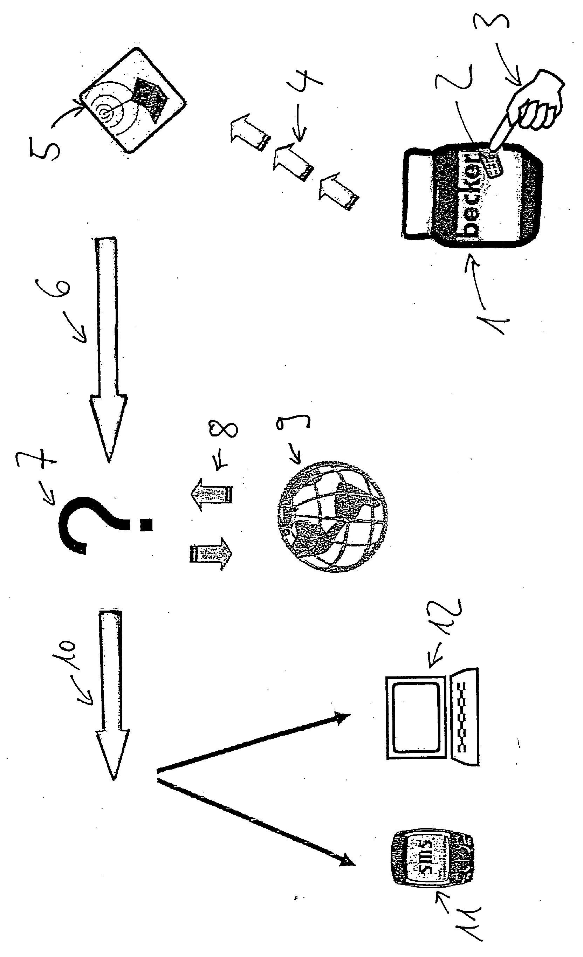

Eine Ausführungsform der Erfindung ist in der Figur dargestellt und wird nachfolgend näher beschrieben.

In der Figur ist ein System schematisch gezeigt, mit dem sich die Erfindung umsetzen lässt. Dabei ist auf einem Produkt 1 ein kontaktsensitives Label 2 aufgebracht, das der Kunde mit seiner Hand 3 druckbeaufschlagt. Durch den Fingerdruck wird zunächst das dem Label zugeordnete (nicht dargestellte) Sensormittel angesprochen, wobei der Kunde über das Sensormittel auch biometrisch identifiziert werden könnte. Diese Identifikation ist dann vorteilhaft, wenn lediglich Daten angezeigt werden sollen, für die dieser Kunde autorisiert ist oder die mit seinem persönlichen Profil in einer Datenbank übereinstimmen. Nachdem das Sensormittel die gezielte Beaufschlagung des Labels registriert hat, gibt ein mit der Vorrichtung zur Datenübertragung verbundenes Kontrollmittel die Datenübertragung frei. Dazu erhält das Kontrollmittel einen von dem Sensormittel aufgrund der Beaufschlagung generiertes Signal. Über die Funkstrecke 4 werden daraufhin die Daten vermittels Nahfunk an die lokale Leseeinheit 5 gesendet, wobei die Daten in diesem Fall den Preis des Produktes und Information über die Inhaltsstoffe umfassen. Die Daten können gleichfalls Identifikationsinformation und Standortdaten betreffend den Nutzer enthalten. Von der Leseeinheit 5 werden die Daten via TKoder IT Verbindung 6 an ein Management System 7 gesendet, dem Information über die multimediale Erreichbarkeit des Nutzers vorliegt und das dementsprechend das geeignete Medium auswählt.

Gegebenenfalls kann an dieser Stelle über den Weg 8 weitere Information aus dem Internet 9 oder eine anderen dem Management System 7 zugänglichen Datenbank abgerufen werden. Vom Management System 7 werden die Daten via TK- oder IT Verbindung 10 an das ausgewählte Medium, hier das Handy 11 oder ein PC 12 übertragen und auf dem jeweiligen Bildschirm dargestellt.

In einer anderen Ausführungsform ist es auch eine nach demselben Prinzip funktionierende Werbeanzeige denkbar, die mit einem erfindungsgemäßen Label versehen ist. Der Kunde kann dann über die jeweiligen sensitiven Bereiche entweder Produktinformationen erfragen, oder die beworbene Ware direkt in einem virtuellen Einkaufskorb ablegen. Schon beim Ablegen kann der Preis registriert und von einem Kundenkonto abgebucht werden. Durch die vom Kunden bewusst vorgenommene Beaufschlagung kann dieser sicherstellen, dass nur die ausgewählte Ware berechnet wird. Im Fall eines solchen Systems spielt die Identifikation und Legitimierung des Kunden eine besondere Rolle.

## Patentansprüche

1. Zum Aufbringen auf Waren vorgesehenes intelligentes Etikett ("Smart-Label") aufweisend eine elektronische Schaltung, einen Speicher zur Aufnahme insbesondere produktspezifischer Daten und eine Vorrichtung zur Datenübertragung,
**gekennzeichnet**
**durch** ein Sensormittel, das eine gezielte Beaufschlagung des Etiketts registriert, und wobei ein mit der Vorrichtung zur Datenübertragung verbundenes Kontrollmittel eine Datenübertragung freigibt, sobald es einen von dem Sensormittel aufgrund der Beaufschlagung generierten Impuls erhält.

2. Smart-Label nach Anspruch 1,
**dadurch gekennzeichnet, dass** das Kontrollmittel die Übertragung von im Speicher vorhandenen spezifischen Daten freigibt.

3. Smart-Label nach Anspruch 2,
**dadurch gekennzeichnet , dass** das Sensormittel eine mechanische Beaufschlagung registriert.

4. Smart-Label nach einem der vorherigen Ansprüche,
**dadurch gekennzeichnet , dass** das Sensormittel einen kontaktsensitiven Bereich, insbesondere einen Mikroschalter, aufweist, wobei das Sensormittel nach einer Berührung des kontaktsensitiven Bereiches durch einen Nutzer den Impuls generiert.

5. Smart-Label nach Anspruch 4,
**dadurch gekennzeichnet, dass** das Sensormittel einen Fingerprintsensor mit kontaktsensitivem Bereich aufweist, über den das Sensormittel eine Authentifikation des Nutzers vornimmt.

6. Smart-Label nach einem der vorherigen Ansprüche,
**dadurch gekennzeichnet, dass** das Sensormittel einen auf eine vorgebbare Frequenz und/oder eine vorgebbare Kennung sensiblen photosensitiven Bereich, insbesondere eine Photodiode, aufweist, wobei das Sensormittel nach einer Beaufschlagung des photosensitiven Bereiches mit dem entsprechenden Lichtsignal den Impuls generiert.

7. System umfassend ein Smart-Label nach einem der vorherigen Ansprüche und eine Leseeinheit, mit der im Speicher des Labels vorhandene Daten auslesbar sind,
**gekennzeichnet durch** ein Managing System, das mit der Leseeinheit über eine Datenleitung verbunden ist, und das von der Leseeinheit erhaltene Information zur Darstellung an eine von der Leseeinheit getrennte Ausgabeeinheit weitergibt.

8. System nach Anspruch 7,
**dadurch gekennzeichnet, dass** das Managing System anhand vorliegender Information unter mehreren einem Kunden zur Nutzung zur Verfügung stehenden Ausgabeeinheiten auswählt.

9. System nach Anspruch 7 oder 8,
**dadurch gekennzeichnet, dass** das Managing System nach Beaufschlagung des Labels den Preis des mit dem Label versehenen Produktes an eine Registrierkasse zur Rechnungsstellung weitergibt.

10. Verfahren zur Ausgabe von Information, die auf einem Smart-Label, insbesondere nach einem der vorherigen Ansprüche, gespeichert ist,
**dadurch gekennzeichnet, dass** die Information nach Beaufschlagung des Labels an eine mit einem Ausgabegerät verbundene Leseeinheit geschickt und auf der Ausgabegerät ausgegeben wird.

11. Verfahren nach Anspruch 10,
**dadurch gekennzeichnet, dass** auf dem Ausgabegerät Produktinformation angezeigt wird.
